# FASCICULE DE BREVET EUROPEEN

(11) **EP 0 533 527 B1**
(45) Date de publication et mention de la délivrance du brevet: **27.12.1995**
(21) Numéro de dépôt: 92402445.8
(22) Date de dépôt: 07.09.1992
(51) Int. Cl.: F15B 1/12, B60G 15/12, B60G 11/30

(54) **Bloc hydropneumatique muni d'un accumulateur hydropneumatique à membrane et d'un amortisseur dissymétrique**
Hydropneumatische Einheit mit einem Membranspeicher und einem asymmetrischen Dämpfer
Hydropneumatic unit with a hydropneumatic diaphragm accumulator and an asymmetric damper

(30) Priorité: 17.09.1991 FR 9111878
(43) Date de publication de la demande: 24.03.1993
(73) Titulaire: AUTOMOBILES PEUGEOT, 75116 Paris (FR); AUTOMOBILES CITROEN, 92200 Neuilly-sur-Seine (FR)
(72) Inventeur: Richard, Denis, F-94600 Choisy-le-Roi (FR)
(74) Mandataire: Boivin, Claude

(56) Documents cités:
- EP-A- 0 050 446
- FR-A- 2 170 600
- AUTOMOTIVE ENGINEERING. vol. 86, no. 4, Avril 1978, WARRENDALE US page 22 'Fluid/Gas Suspension for Front-Drive Cars'

## Description

La présente invention concerne un bloc hydropneumatique comprenant un accumulateur hydropneumatique à membrane délimitant une chambre à gaz et une chambre à huile, ledit accumulateur étant muni d'un embout de raccordement à un circuit hydraulique et, incorporé dans un chambrage de l'embout, un amortisseur dissymétrique. ces blocs sont utilisés dans les suspensions de véhicule et permettent d'obtenir un amortissement différent en détente et en attaque. Un bloc hydropneumatique de ce genre est décrit dans le document EP-A- 050 446.

Mais dans les blocs hydropneumatiques réalisés jusqu'à présent, cette différence d'amortissement ne s'obtient qu'à partir d'une certaine vitesse de débattement vertical de la roue; aux faibles vitesses de débattement, l'amortissement est le même en détente qu'en attaque.

La présente invention a pour objet un bloc hydropneumatique qui permet au contraire d'obtenir un amortissement différent en détente et en attaque, quelle que soit la vitesse de passage du liquide, donc de débattement de la roue.

Ce bloc est caractérisé en ce que l'amortisseur dissymétrique comprend un amortisseur à clapets muni d'un gicleur axial, un clapet de dissymétrie et un limiteur de levée.

Dans un mode de réalisation de l'invention, le clapet de dissymétrie présente un gicleur axial de diamètre différent de celui du gicleur axial de l'amortisseur. Suivant que la suspension travaillera en détente ou en attaque, la vitesse de passage du liquide sera limitée par le gicleur de l'amortisseur ou celui du clapet de dissymétrie; les amortissements seront donc différents.

On a décrit ci-après à titre d'exemple non limitatif, un mode de réalisation du bloc selon l'invention, avec référence aux dessins annexés dans lesquels :

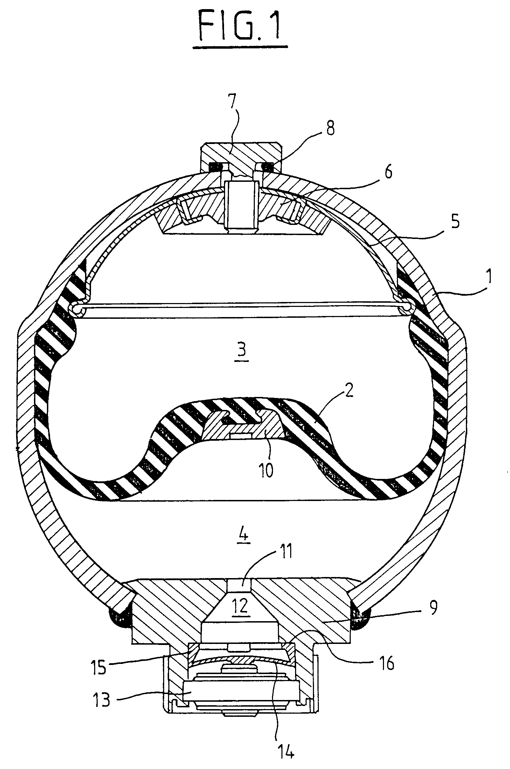

La Figure 1 est une vue en coupe axiale du bloc;
La Figure 2 est une vue en coupe à plus grande échelle d'un détail;
La Figure 3 est une vue en plan du clapet de dissymétrie.

Tel qu'il est représenté au dessin, le bloc hydropneumatique comprend un accumulateur hydropneumatique constitué par une enveloppe sphérique 1 séparée par une membrane souple 2 en une chambre à gaz 3 et une chambre à huile 4; cette membrane est plaquée à l'intérieur de l'enveloppe par une coupelle en tôle 5; un écrou 6 serti sur cette coupelle est fixé sur une vis 7 munie d'un joint d'étanchéité 8.

La chambre à huile 4 est fermée par un embout 9 soudé sur l'enveloppe 1. Sur la partie centrale de la membrane 2 est surmoulé un clapet 10, en matière plastique dure, qui évite à la membrane de pénétrer dans le trou 11 de l'embout lorsqu'il n'y a plus de pression interne hydraulique et que la membrane vient se plaquer sur la face interne de l'embout.

L'embout 9 comporte un chambrage 12 dans lequel débouche le trou 11 et qui contient un amortisseur à clapets 13, un clapet de dissymétrie 14 et un limiteur de levée 15. Le limiteur de levée 15 est emmanché serré en appui contre un épaulement 16 de la paroi du chambrage; il est constitué par un anneau périphérique 15a sur lequel prend appui la périphérie du clapet 14, une partie cylindrique centrale 15b servant de butée au clapet 14 et une partie plane qui relie la partie périphérique 15a et la partie centrale 15b et qui est percée de trous 15c pour le passage du liquide.

Le clapet de dissymétrie 14 comprend une partie centrale 14a munie d'un gicleur axial 14b et des pattes 14c disposées radialement et présentant des élargissements périphériques 14d. Il est monté en appui périphérique sur le limiteur de levée 15.

L'amortisseur 13 est constitué par un corps en acier fritté qui comporte des alvéoles 13a évasés sur une face et pouvant être fermés sur l'autre face par des clapets flexibles de détente 17 et d'attaque 18; le nombre d'alvéoles est identique dans les deux sens. Dans l'axe du corps se trouve une partie 19 munie d'un gicleur axial 19a de diamètre supérieur au diamètre du gicleur axial 14b du clapet de dissymétrie 14 et d'un épaulement 19b qui est plaqué contre les clapets de détente 17; son autre extrémité présente un sertissage 19c qui maintient les clapets d'attaque 18 par l'intermédiaire d'une rondelle 20.

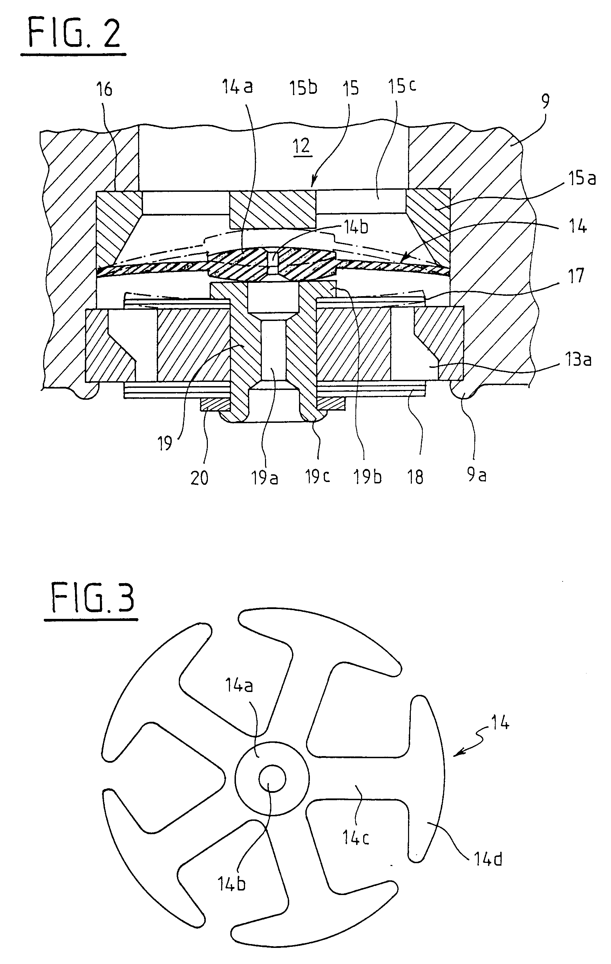

La face interne de l'épaulement 19b de la partie 19 de l'amortisseur se trouve approximativement au niveau du bord de l'anneau périphérique 15a du limiteur de levée 15 de sorte que la partie centrale 14a du clapet de dissymétrie 14 est en appui sur l'amortisseur et que sa concavité est tournée vers celui-ci; cette concavité augmente lorsque le clapet se déforme pour venir prendre appui sur le limiteur de levée 15, comme indiqué en traits mixtes à la Figure 2. L'amortisseur 13 est maintenu en appui contre un épaulement de chambrage 12 par un sertissage 9a de l'embout 9, en maintenant lui-même le limiteur de levée 15 et le clapet dissymétrique dans ce chambrage.

Quand la roue passe sur un obstacle, son élément porteur fait entrer dans la chambre 4 un certain volume d'huile qui traverse l'amortisseur 13; si le débit est important, l'huile passe sur les clapets flexibles 17 qu'elle soulève. Inversement quand la roue tombe dans un trou, un certain volume d'huile va passer de la chambre 4 vers l'élément porteur de la roue; si le débit est important l'huile passe sous les clapets flexibles 18 qu'elle soulève. En prévoyant un nombre de clapets 18 supérieur à celui des clapets 17, on peut obtenir un amortissement plus important en détente qu'en attaque, tout au moins à partir d'un certain débit de liquide.

Mais, dans le cas d'un faible débit de liquide, celui-ci, en attaque, traverse le gicleur 13a et soulève le clapet 14 qui vient en butée contre le limiteur de butée 15. Par contre, en détente, le clapet 14 est appliqué contre l'amortisseur et le liquide doit traverser le gicleur 14b. Comme le diamètre de celui-ci est inférieur à celui du gicleur 19a, l'amortissement est encore plus important en détente qu'en attaque. En définitive, l'amortissement est supérieur en détente qu'en attaque, quelle que soit la vitesse de déplacement vertical de la roue.

## Revendications

1. Bloc hydropneumatique comprenant un accumulateur hydropneumatique (1) à membrane (2) délimitant une chambre à gaz (3) et une chambre à huile (4), ledit accumulateur étant muni d'un embout de raccordement (9) à un circuit hydraulique et, incorporé dans un chambrage (12) de l'embout, un amortisseur dissymétrique (13),
caractérisé en ce que l'amortisseur dissymétrique comprend un amortisseur à clapets (13) muni d'un gicleur axial (19a), un clapet de dissymétrie (14) et un limiteur de levée (15).

2. Bloc hydropneumatique selon la revendication 1,
caractérisé en ce que le clapet de dissymétrie (14) présente un gicleur axial (14b) de diamètre différent de celui du gicleur axial (19a) de l'amortisseur (14).

3. Bloc hydropneumatique selon la revendication 1 ou 2,
caractérisé en ce qu'entre le circuit hydraulique et la chambre à huile (4) de l'accumulateur (1) sont interposés dans l'ordre, l'amortisseur à clapets (13), le clapet de dissymétrie (14) et le limiteur de levée (15).

4. Bloc hydropneumatique selon l'une des revendications 1 à 3,
caractérisé en ce que le clapet de dissymétrie (14) comporte une partie centrale (14a) munie d'un gicleur axial (14b) et de pattes (14c) disposées radialement et munies d'élargissements périphériques (14d).

5. Bloc hydropneumatique selon l'une quelconque des revendications 1 à 4,
caractérisé en ce que le clapet de dissymétrie (14) est monté en appui périphérique sur le limiteur de levée (15), sa partie centrale (14a) étant en appui sur l'amortisseur (13) et sa concavité étant tournée vers l'amortisseur.

6. Bloc hydropneumatique selon l'une quelconque des revendications précédentes,
caractérisé en ce que le limiteur de levée (15) est emmanché serré en appui sur un épaulement (16) d'un chambrage (12) de l'embout (9).

7. Bloc hydropneumatique selon l'une des revendications précédentes,
caractérisé en ce que le limiteur de levée (15) comprend un anneau périphérique (15a) sur lequel prend appui la périphérie du clapet de dissymétrie (14), une partie cylindrique centrale (15b) servant de butée au clapet de dissymétrie (14) et, reliant la partie périphérique et la partie centrale, une partie plane percée de trous (15c) pour le passage du liquide.

8. Bloc hydropneumatique selon l'une quelconque des revendications précédentes,
caractérisé en ce que le limiteur de levée (15) est dimensionné de telle sorte que la concavité du clapet de dissymétrie (14) augmente quand ce clapet vient en appui sur le limiteur de levée (15).

## Claims

1. Hydropneumatic block including a hydropneumatic accumulator (1) with a membrane (2) delimiting one gas chamber (3) and one oil chamber (4), said accumulator being fitted with a joining piece (9) for connection to a hydraulic circuit and, incorporated in a recess (12) of the joining piece, a disymmetrical absorber (13),
wherein the disymmetrical absorber includes a valve absorber (13) fitted with a axial nozzle (19a), a disymmetrical valve (15) and a lift limiter (15).

2. Hydropneumatic block according to claim 1, wherein the disymmetrical valve (14) has a axial nozzle whose diameter differs from that of the axial nozzle (19A) of the absorber (14).

3. Hydropneumatic block according to claim 1 or 2,
wherein inserted between the hydraulic circuit ad the oil chamber are in order the valve absorber (13), the disymmetrical valve (14) and the lift limiter (15).

4. Hydropneumatic block according to any one of claims 1 to 3,
wherein the disymmetrical valve (145) comprises a central portion (14a) provided with an axial nozzle (14b) and brackets (14c) disposed radially and fitted with peripheral extensions (14d).

5. Hydropneumatic block according to any one of claims 1 to 4,
wherein the disymmetrical valve (14) is mounted in peripheral support on the lift limiter (15), its central portion (14a) being in support on the absorber (13) and its concavity being orientated towards the absorber.

6. Hydropneumatic block according to any one of the preceding claims,
wherein the lift limiter (15) and fixed tightened in support on a shoulder (16) of a recess (12) of the joining piece (9).

7. Hydropneumatic block according to any one of the preceding claims,
wherein the lift limiter (15) includes a peripheral ring (15a) on which takes support is the periphery of the disymmetrical valve (14), a central cylindrical portion (14) and, connecting the peripheral portion and the central portion, a flat portion pierced with holes (15c) allowing for passage of the liquid.

8. Hydropneumatic block according to any one of the preceding claims,
wherein the size of the lift limiter is such to ensure that the concavity of the disymmetrical valve (14) increases when this valve is in support on the lift limiter (15).

## Patentansprüche

1. Hydropneumatische Einheit mit einem hydropneumatischen Speicher (1), der eine eine Gaskammer (3) von einer Ölkammer (4) abgrenzende Membran (2) aufweist, wobei der besagte Speicher mit einem Anschlußstück (9) für einen Hydraulikkreis und einem in einer Einsenkung (12) des Anschlußstücks angeordneten asymmetrischen Dämpfer (13) versehen ist, dadurch gekennzeichnet, daß der asymmetrische Dämpfer einen mit einer axialen Düse (19a) versehenen Klappenventildämpfer (13), sowie eine Asymmetrieklappe (14) und einen Hubbegrenzer (15) enthält.

2. Hydropneumatische Einheit nach Anspruch 1, dadurch gekennzeichnet, daß die Asymmetrieklappe (14) eine axiale Düse (14b) aufweist, deren Durchmesser vom Durchmesser der axialen Düse (19a) des Dämpfers (13) verschieden ist.

3. Hydropneumatische Einheit nach Anspruch 1 oder 2, dadurch gekennzeichnet, daß zwischen den Hydraulikkreis und die Ölkammer (4) des Speichers (1) der Reihe nach der Klappenventildämpfer (13), die Asymmetrieklappe (14) und der Hubbegrenzer (15) eingeschaltet sind.

4. Hydropneumatische Einheit nach einem der Ansprüche 1 bis 3, dadurch gekennzeichnet, daß die Asymmetrieklappe (14) einen mit einer axialen Düse (14b) versehenen zentralen Teil (14a) aufweist, sowie radial angeordnete Befestigungszungen (14c), die an der Peripherie Verbreiterungen (14d) aufweisen.

5. Hydropneumatische Einheit nach irgendeinem der Ansprüche 1 bis 4, dadurch gekennzeichnet, daß die Asymmetrieklappe (14) sich mit ihrer Peripherie am Hubbegrenzer (15) abstützt, während ihr zentraler Teil (14a) sich am Dämpfer (13) abstützt und ihre konkave Seite dem Dämpfer zugewandt ist.

6. Hydropneumatische Einheit nach irgendeinem der vorhergehenden Ansprüche, dadurch gekennzeichnet, daß der Hubbegrenzer (15) im Preßsitz, sich an einer Schulter (16) abstützend in eine Einsenkung (12) des Anschlußstücks (9) eingesetzt ist.

7. Hydropneumatische Einheit nach einem der vorhergehenden Ansprüche, dadurch gekennzeichnet, daß der Hubbegrenzer (15) einen peripheren Ring (15a) aufweist, an dem sich die Peripherie der Asymmetrieklappe (14) abstützt, sowie einen zylindrischen zentralen Teil (15b), der als Anschlag für die Asymmetrieklappe (14) dient, und einen den peripheren Teil mit dem zentralen Teil verbindenden ebenen Teil (15c), der mit Löchern (15c) für den Durchtritt der Flüssigkeit versehen ist.

8. Hydropneumatische Einheit nach irgendeinem der vorhergehenden Ansprüche, dadurch gekennzeichnet, daß der Hubbegrenzer (15) derart dimensioniert ist, daß die Konkavität der Asymmetrieklappe (14) größer wird, wenn sich diese Klappe am Hubbegrenzer (15) abstützt.
